# EUROPEAN PATENT APPLICATION

(11) **EP 1 811 275 A1**
(43) Date of publication of application: **25.07.2007**
(21) Application number: 06100641.7
(22) Date of filing: 20.01.2006
(51) Int. Cl.: G01G 19/08

(54) **Load mesurement system**

(71) Applicant: HYNES, Eamon, Raheen Limerick (IE); MARTIN, James, Killmallock Limerick (IE); HYNES, Colm, Rochestown Cork (IE); RYAN, Austin, Kilmallock Limerick (IE)
(72) Inventor: HYNES, Eamon, Raheen Limerick (IE); MARTIN, James, Killmallock Limerick (IE); HYNES, Colm, Rochestown Cork (IE); RYAN, Austin, Kilmallock Limerick (IE)
(74) Representative: Moore, Barry

(57) **Abstract**

The invention provides a vehicle load measurement system. By providing a measurement system for each load bearing tyre of the vehicle, the system of the invention enables a measurement of tire pressure, temperature and distance of the tire axle to the ground. Each of the three measurement are then used to provide a weight measurement indicative of the weight of the load of the vehicle.

## Description

### Field of the Invention

The present invention relates to a load measurement system and in particular to a load measurement system that is configured to measure the load carried by vehicles or structures with pneumatic wheels such as cranes or the like..

### Background

It is useful for billing reasons and often a legal requirement for safety reasons to weigh the contents of vehicles or structures with pneumatic wheels, goods vehicles are a particularly common case in point. For goods vehicles this has traditionally been achieved using roadside weigh stations that weigh the vehicle, and calculate the weight of the load by subtracting the un-loaded vehicle weight. Some of the disadvantages of this approach are that the vehicle owner pays for this weighing service each time the vehicle is measured, there are a limited number of weigh scales which are not always on the route of the produce, thus requiring expensive detours and there can be delays and queuing. Furthermore, such techniques require the installation and servicing of such weigh stations, and also require the knowledge of the un-loaded vehicle weight.

As a result of these and other costs and disadvantages, there is a trend away from such roadside installations to a situation where the vehicle can provide an indication of the weight it is carrying. By having vehicles fitted with on-board weighing systems it is possible to eliminate the need to use weigh stations. These on-board systems can calculate load weight using a variety of methods. One approach is to use load cells inserted between the vehicle load-bearing surface and the chassis. Once a load is applied, the load cells deflect and the resulting strain in the load cells can be converted into an applied weight. Another approach is to exploit the air suspension already installed on some heavy goods vehicles, as a load is applied the air suspension increases the system pneumatic pressure to maintain the trailer height, this increase in pressure can be converted to load weight. A further alternative is described in WO0186239 which describes the use of a temperature calibrated tire pressure measurement to determine the weight that would have caused the changes in pressure from an initial pressure measurement.

While these systems are an improvement on the weigh scale there are some disadvantages with current solutions. After-market installation of load cells requires the load-bearing surface of the vehicle to be removed at high cost (by crane or hydraulic lift for example), to allow the (expensive) load cell technology to be installed.

The air suspension approach is limited to vehicles using air suspension which does not represent all goods vehicles, in addition the system accuracy may not be capable of meeting legislative requirements.

The pressure measurement system requires knowledge of the initial pressure within the tire before the weight was added.

As a result there is a further need to provide a load measurement system which addressed these and other problems.

In addition, there is a further need to provide a system capable of measuring static load (for example the weight of goods in a vehicle) which can also be used to measure the dynamic or changing load (and load distribution) during acceleration, braking or cornering.

### Summary

Accordingly, the invention provides a vehicle load measurement system that utilises a plurality of measurements including tire pressure, temperature of the air within the tire and a measurement indicative of the deflection of the tire axle towards the ground and from the vehicle chassis to provide as an output a measure of the weight that is carried within the vehicle.

The invention therefore provides a measurement system as detailed in claim 1. Advantageous embodiments are provided in the dependent claims.

These and other features of the invention will be better understood with reference to the following drawings.

### Brief Description of the Drawings

Figure 1 is a schematic of a vehicle incorporating a load measurement system according to the invention.
Figure 2 is a schematic of components of the load measurement system of Figure 1.
Figure 3 is a graphical representation of the type of data that may be stored as part of the calibration process.

### Detailed Description of the Drawings

The present invention provides a system that allows on-board load weighing to be achieved. The system can be installed on a variety of different types of vehicles, independent of the suspension technology utilised for the vehicle- differing from the air suspension techniques of the prior art described in the Background section. Furthermore, the system of the present invention may be installed without requiring a removal of the load bearing surface during installation (as is required by load cell technology). The system of the present invention may be installed either as original equipment from the vehicle manufacturer or as an after-market sale option.

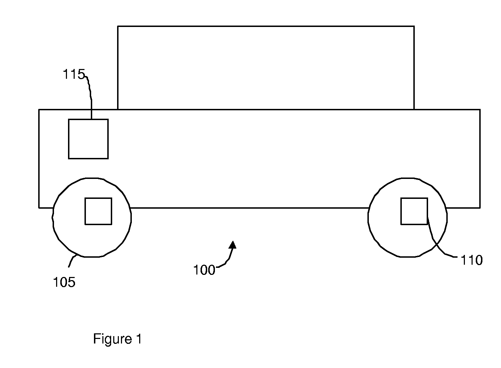

The present invention utilises the realisation that the weight of any vehicle load is transferred to the road surface through the tires, and the sum of the loads (weights) supported by each tire is equal to the total load (weight) of the vehicle plus its payload. This is the same weight that was traditionally measured by weigh scales. If the load supported by each tire can be measured by systems on-board the vehicle, the requirement for weigh-scales is eliminated. To reduce the invention principle described above to practice, the load (weight) on each tire must typically be measured. Although measurement at one tyre may provide an indicative measurement of the weight being carried by the vehicle it makes the assumption that the weight is evenly distributed throughout the vehicle. As such it is more accurate to take a measurement from each load bearing tyre or clusters of tyres in those arrangement where multiple wheels are supported on each axle. Exemplary embodiments of the invention will now be described with reference to Figures 1 to 3.

When a tire is loaded, the load causes an increase in pressure inside the tire and a deflection of the tire, the system reaches equilibrium when the load applied is fully supported by the tires. The deflection of the tire results in the vehicle axle (or wheel hub) moving closer to the road surface. The distance travelled as a result of this movement is a function of several factors including:
the applied load,
the pressure inside the tire,
the mechanical properties of the tire and
the ambient temperature.

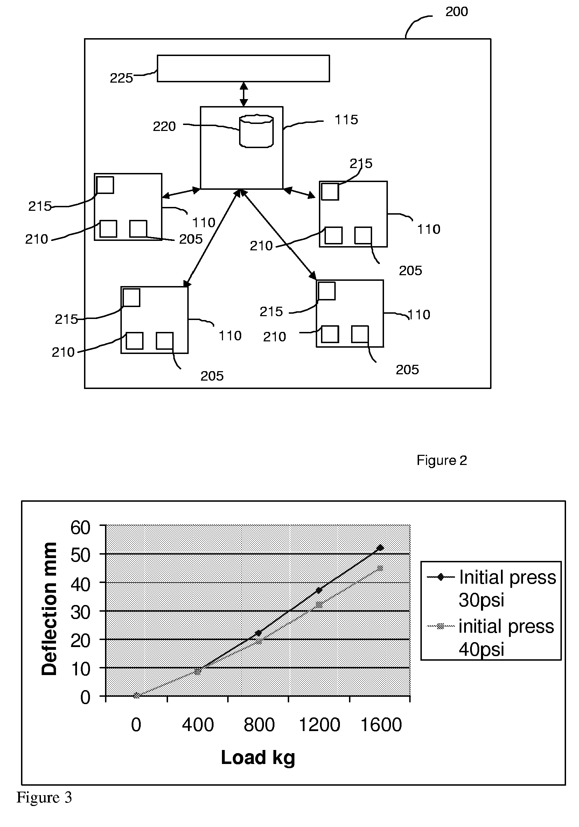

By adding a measurement system to the vehicle that measures all the relevant parameters, the vehicle weight can be known. As shown in Figure 1, which shows in schematic form, a vehicle 100 provided with a measurement system of the present invention, has on each of the load bearing wheels a measurement module 110. Each measurement module 110 is configured to measure a plurality of different measurements specific to each wheel. An example of the measurement component sub-systems that are provided in the measurement module is shown in Figure 2. In this example, the system is configured to measure the pressure (component 205) and temperature (component 210) within each load-bearing tire

It will be understood that the temperature measurement is important from a Gas Law perspective. If the temperature rose the pressure would increase (even with no additional load) and the distance to the road could also increase (as the tire "inflated") due to temperature. The temperature measurement is therefore an essential element in the system. It may be necessary in certain installations to add in addition to the temperature sensor within the tyre, an additional sensor configured to determine the temperature outside the tire.

A further distance measurement component 215 is configured to measure the distance to the road surface from each tire axle The invention makes use of measurements from load-bearing tyres and as such it is necessary to be able to determine if a tyre is load bearing or not. One option is to measure each tyre and then one can definitively state that the total load has been catered for. An other alternative is to use the distance of the axle from the road which should be indicative of whether the tire is load-bearing. To provide for this an embodiment of the invention (not shown) provides for an optional distance measurement from the axle "up" to the chassis in addition to the measurement from the axle "down" to the road surface. It will be further understood that the provision of this second distance measurement is advantageous in that it provides for an averaging of the actual distance from the axle to the road over bouncy road conditions when travelling over an uneven road surface.

The collected data from each of the sub-modules is then compiled and transmitted to a central processor 115 which uses calibration data 220 to account for the mechanical properties of the tires. By compiling data from each of the load bearing tires the vehicle weight can be determined. This determined weight can be either displayed on a visual display 225 that is desirably located on a prominent area of the vehicle- for example the vehicle dashboard- or can be communicated over a wireless communication link to a remote processing system for analysis or display. Examples of such remote processing systems include statutory bodies responsible for ensuring that vehicles are not over laden (and in this case the communication will typically be encrypted and include an identifier of the vehicle in question). Other examples include a vehicle fleet operator, which manages a plurality of vehicles and needs to ensure that each of the vehicles are operating within the legal parameters. This type of communication is known for other types of vehicle data - for example vehicle position but heretofore it has not been possible to accurately ensure that a vehicle is operating within the legal weight limits without physically stopping and checking the vehicle.

The system of the present invention has the added advantage that the pressure of each tire on the vehicle can be monitored for safety and fuel economy reasons and leaks/punctures can be identified and corrected prior to any accident. As the system can operate continuously, once a set of operating parameters are met for a fixed weight, any change in those parameters is indicative of a problem in one or more of the tires. Such advance warning may be used to provide a warning indicator to the driver of the vehicle.

Each of the sensors or sub-modules provided in the tire measurement module 100 may be provided using a variety of different means. For example, the distance to the road surface and chassis can be measured using infra-red, radar, laser ultrasound or any distance measurement technology, as will be appreciated by the person skilled in the art. The distance sensor to measure distance to the road surface can be placed on the axle adjacent to each tire (or tires) or even within each tire. The in-tire pressure and temperature can be measured with active (powered) sensors or electronics incorporated inside the tire (for example on the wheel rim, inside the valve stem or attached to or within the tire rubber itself) and the information transmitted to an external receiver module via an RF (radio frequency) or other remote link.

It will be appreciated that a wireless link providing the communication of data from within each tyre to the outside controller is preferable to a wired option. One option for a wired system would however be the use of a "sliding" contact at the wheel bearing-like a commutator used in electric motors. However in most instances this would be impractical because it would require custom wheels and hubs.

Alternatively a passive in-tire sensor system can be used where an external module can interrogate in-tire sensors that have no built-in power sources. Such a passive device may be provided by for example a surface acoustic device which is pinged and provides a response based on the operating characteristics, an RF device which is irradiated with RF power to elicit a desired response or indeed a device of the type that absorbs power at a frequency that is proportional to temperature or pressure- depending on the type of sensor.

By combining the data from these measurement systems together and using a calibration curve and/or a model for a particular vehicle/tire, unknown loads can be determined by referencing the calibration data and/or the load model. It will be understood that a load model may be required for each type or class of vehicle or indeed for each specific manufacturer. A plurality of different load models may be provided and the correct one is then used in the comparison process.

Depending on the repeatability of the mechanical characteristics of tires and the accuracy requirement from the system, a once-off calibration per vehicle may be all that is required. For other applications it may be necessary to re-calibrate the system at specified intervals of time/distance travelled/tire condition. Knowledge of the tire make/model and/or size alone may be sufficient to allow measurement without calibration, the practical use of this approach will depend on the accuracy requirements for the load measurement.

Zero load correction is possible with this system by setting the un-laden weight of the vehicle to zero, thereby only the additional loads will register as load weight.

In order to provide the desired information, the system of the invention typically includes an on-board processor that provides a visual reading on request. It is also possible to enable the system to communicate with remote entities, for example as you drive by a toll booth that the actual load of the vehicle will be transmitted to the toll booth. The implemented version will be customizable by the user of the system as it will be appreciated that it is possible to have the information displayed locally on the vehicle, all the history stored locally, also have a transmitter sending the information to a fleet manager and in addition to transmit the information to a toll booth or other "interested party".

It will be understood that an accurate assessment if the load carried by the vehicle requires an accurate calibration set for use when comparing the measured values from each of the sensor to give an output from the system. Figure 3, shows as an example, a plot of some of the data generated from a system in accordance with the invention. The deflection (in millimetres) is plotted versus load (in kilograms) for two different tire pressures (30 psi and 40 psi) for a given temperature. If (at this temperature) an unknown load is now applied and for this example assuming a pressure of 30psi, the weight in kilograms of the unknown load can be determined by measuring the deflection and using the blue curve to read off the equivalent load. By characterising the system over a range of pressures, temperatures and deflections, a mathematical model and/or look-up table will allow any unknown load (weight) to be determined for any combination of pressure, temperature and deflection.

It will be appreciated that an exemplary embodiment of a vehicle load measurement system has been described. By providing a measurement system for each load bearing tyre of the vehicle, the system of the invention enables a measurement of tire pressure, temperature and distance of the tire axle to the ground and/or axle to the chassis. Each of the three/four measurements are then used to provide a weight measurement indicative of the weight of the load of the vehicle. Although specific embodiments and parameters have been used to explain the operation of the invention it will be appreciated that modifications can be made without departing from the spirit or scope of the invention, which is not to be limited in any way except as may be deemed necessary in the light of the appended claims.

The words comprises/comprising when used in this specification are to specify the presence of stated features, integers, steps or components but does not preclude the presence or addition of one or more other features, integers , steps, components or groups thereof.

## Claims

1. A vehicle load measurement system configured to provide as an output a measurement of the load being carried by the vehicle, the system comprising:
a. A measurement module provided for each load bearing tire of the vehicle, the measurement module having a plurality of sensors, each of the sensors being configured to provide a measurement of a specific parameter selected from one of the pressure of the tire, the temperature of the tire and the distance of the axle supporting the tire from the ground, the measurements provided by each sensor being combined to provide a data set for each measurement module, and
b. A processing system configured to use the data sets of each measurement module to provide a measurement indicative of the load supported by that tire, the processing system being configured to further combine the plurality of measurements indicative of the load supported by each tire to a measurement indicative of the load carried by the vehicle.

2. The system as claimed in claim 1 wherein the tire temperature and pressure sensors are configured to provide a measurement of the temperature and pressure within the tire.

3. The system as claimed in any preceding claim wherein the processing system is configured to average the measurements resultant from each of the tires to provide the measurement indicative of the load carried by the vehicle.

4. The system as claimed in any preceding claim wherein the measurement module is configured to communicate wirelessly with the processing system.

5. The system as claimed in any preceding claim further including a display, the display enabling a display of the measurement indicative of the load carried by the vehicle.

6. The system as claimed in claim 5 wherein the display is provided on the vehicle.

7. The system as claimed in claim 5 wherein the display is provided remotely from the vehicle, the system further including communication means providing a communication channel between the display and the processing system so as to enable a transfer of the data relating to the measurement indicative of the load being carried by the vehicle.

8. The system as claimed in claim 7 wherein the communication channel is activated remotely from the vehicle, thereby enabling an external party to control the display of the measurement indicative of the load being carried by the vehicle.

9. The system as claimed in any preceding claim wherein measurement modules provide a continuous output of the parameters measured by the sensors, the processing system being configured to monitor these outputs for trends or anomalies within the outputs so as to provide an indicator of a tire failure.

10. The system as claimed in any preceding claim wherein the distance sensor is provided within each tire.

11. The system as claimed in any one of claims 1 to 9 wherein the distance sensor is located on an axle adjacent to the tire it is measuring.

12. The system as claimed in any preceding claim wherein the measurement module includes a second distance measurement sensor, the second distance measurement sensor being configured to determine distance of the axle supporting the tire from the chassis of the vehicle.
